# EUROPÄISCHE PATENTANMELDUNG

(11) **EP 0 771 866 A1**
(43) Veröffentlichungstag der Anmeldung: **07.05.1997**
(21) Anmeldenummer: 96115063.8
(22) Anmeldetag: 19.09.1996
(51) Int. Cl.: C12C 7/06

(54) **Heizboden für Maischpfanne**

(30) Priorität: 30.10.1995 DE 29517344 U
(71) Anmelder: Anton Steinecker Maschinenfabrik GmbH, 85356 Freising-Attaching (DE)
(72) Erfinder: Wiederhold, Johannes, 94255 Böbrach (DE); Stippler, Kurt, Dr.-Ing., 85417 Marzling (DE); Wasmuht, Klaus-Karl, 92792 Ellingen (DE); Redl, Simon, 84072 Reichertshausen (DE)
(74) Vertreter: Grünecker, Kinkeldey, Stockmair & Schwanhäusser Anwaltssozietät

(57) **Zusammenfassung**

Die Erfindung betrifft eine Maischpfanne, die einen zylindrischen Außenmantel, einen Pfannenboden, eine Heizvorrichtung sowie ein Rührwerk aufweist.

Um eine gute Durchmischung der Maischeteilchen sowie einen guten Wärmeübergang zu erreichen, ist erfindungsgemäß vorgesehen, daß der Pfannenboden asymmetrisch zur Längsachse der Maischpfanne geneigt angeordnet ist.

## Beschreibung

Die Erfindung betrifft eine Maischpfanne, die einen zylindrischen Außenmantel, einen Pfannenboden, eine Heizvorrichtung sowie ein Rührwerk aufweist.

Eine derartige Maischpfanne ist z.B. bereits aus der EP 0042 037 A2 bekannt. Die in dieser Patentanmeldung vorgeschlagene Maischpfanne weist einen als Heizfläche ausgebildeten Pfannenboden auf, der wiederum aus zwei Bodenteilen gebildet ist, die zum Zentrum hin geneigt sind und bezüglich der Maischpfannenlängsachse symmetrisch sind. Oberhalb des Bodenteils ist ein Rührwerk angebracht.

Bei Maischpfannen mit rundem Querschnitt tritt das Problem auf, daß die Durchmischung der Maische und somit der Wärmeübergang nicht optimal sind, da die Maischeteilchen vorwiegend in horizontalen Ebenen um das Zentrum der Maischpfanne kreisen. Aus diesem Grund wurden beim Stand der Technik als Strömungsbrecher nach oben ragende Zwickelteile zwischen den Bodenteilen angeordnet.

Es hat sich jedoch gezeigt, daß trotz der Anordnung der Zwickelteile die Durchmischung der Maische und somit der Wärmeübergang noch nicht optimal sind. Zudem ist die Fertigung derartiger Zwickelteile als Strömungsbrecher aufwendig und kostspielig.

Der vorliegenden Erfindung liegt daher die Aufgabe zugrunde, eine Maischpfanne bereitzustellen, die eine verbesserte Durchmischung der Maischeteilchen und somit einen verbesserten Wärmeübergang bei gleichzeitig vereinfachter Konstruktion aufweist.

Erfindungsgemäß wird diese Aufgabe dadurch gelöst, daß der Pfannenboden asymmetrisch zur Längsachse der Maischpfanne geneigt angeordnet ist.

Dadurch, daß die Neigung des Pfannenbodens nicht achsensymmetrich bezüglich der Längsachse ist, wir eine rein kreisende Bewegung der ganzen Maischefüllung verhindert. Die Maischeteilchen werden optimal durchmischt, so daß sich ein verbesserter Wärmeübergang ergibt. Dadurch, daß keine scharfen Strömungs- und Wellenbrecher verwendet werden müssen und dadurch, daß die Umfangsgeschwindigkeit des Rührwerks aufgrund der guten Durchmischung herabgesetzt werden kann, werden keine Spelzenteilchen in der Maische beschädigt. Darüber hinaus ist die Herstellung der erfindungsgemäßen Maischpfanne einfach und kostengünstig.

In vorteilhafter Ausgestaltung besteht der Pfannenboden aus zwei Abschnitten, die einen bestimmten Winkel miteinander einschließen. Eine derartige Anordnung des Pfannenbodens bringt eine hervorragende Durchmischung der Maischeteilchen mit sich.

Es ist vorteilhaft, das Rührwerk in einem der beiden Abschnitte zu lagern. Durch diese asymmetrische Anordnung des Rührwerks ergibt sich eine besonders gute Durchmischung der Maische.

In einem bevorzugten Ausführungsbeispiel der vorliegenden Erfindung ist der Pfannenboden als Heizfläche ausgebildet. In bevorzugter Ausführungsform ist der zylindrische Außenmantel zumindest teilweise als Heizfläche ausgebildet. Durch die Beheizung des Außenmantels ergibt sich ein noch besserer Wärmeübergang.

Die Erfindung wird nachfolgend unter Zuhilfenahme der nachfolgenden Figuren näher erläutert.
- Figur 1: zeigt schematisch einen Längsschnitt durch ein Ausführungsbeispiel der erfindungsgemäßen Maischpfanne.
- Figur 2: zeigt einen Schnitt entlang der Linie I - I in Figur 1,
- Figur 3: zeigt einen Schnitt entlang der Linie I-I in Figur 1 gemäß einem weiteren Ausführungsbeispiel der vorliegenden Erfindung.

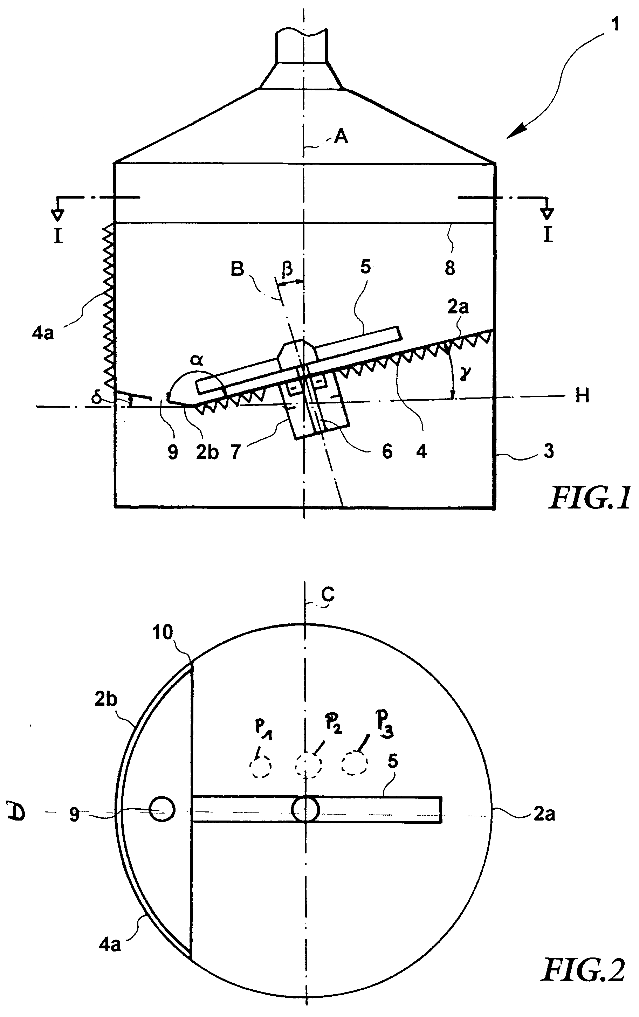

Figur 1 zeigt ein bevorzugtes Ausführungsbeispiel der vorliegenden Erfindung. Die Maischpfanne 1 weist einen zylindrischen Außenmantel 3 auf. Der Pfannenboden 2 besteht aus zwei ebenen unterschiedlich großen Abschnitten 2a und 2b. Der Pfannenboden 2 ist in dem zylindrischen Gehäusemantel 3 der Maischpfanne 1 befestigt, vorzugsweise eingeschweißt. Der Pfannenboden kann einstückig gefertigt werden, wobei die beiden Abschnitte durch Biegen entlang der entsprechenden Trennlinie erzeugt werden können. Die beiden Abschnitte 2a, 2b schließen den Winkel α z.B. von ca. 160-170° miteinander ein. Der erste Abschnitt 2a ist um den Winkel γ, z.B. 10 - 20° zu der Horizontalebene H geneigt, während der zweite Abschnitt 2b um den Winkel δ 5 - 15° zu der Horizontalebene H geneigt sein kann.

Der Aufbau des Pfannenbodens 2 geht noch deutlicher aus der Figur 2 hervor. Die beiden Abschnitte 2a, 2b sind durch die Trennlinie 10 unterteilt, die nicht mit der Mittellinie C zusammenfällt. Im zweiten Abschnitt 2b befindet sich der Auslauf 9 für die Maische. Es ist deutlich in den Figuren erkennbar, daß der Pfannenboden asymmetrisch zur Längsachse A der Maischpfanne angeordnet ist. Das bedeutet also, daß der Pfannenboden - in diesem Ausführungsbeispiel die Abschnitte 2a, b - zumindest zu einer vertikalen Mittelebene asymmetrisch sind. Die vertikale Mittelebene wird in diesem Beispiel z.B. durch die Achsen A und C aufgespannt.

Bei diesem Ausführungsbeispiel ist nur der erste Abschnitt 2a als Heizung 4 ausgebildet. Der zweite Abschnitt, der wesentlich kleiner als der erste Abschnitt ist, weist keine Heizung 4 auf. Dafür ist jedoch der zylindrische Außenmantel 3 in einem Bereich 4a um den zweiten Abschnitt 2b als Heizfläche ausgebildet. Die Heizung 4 ist in üblicher Weise an der Unterseite des Pfannenbodens in Form von Heizkanälen, Heizleitungen etc. angebracht. Die Beheizung erfolgt in bekannter Weise z.B. mit Hilfe von Dampf oder einer geeigneten Heizflüssigkeit.

In dem ersten Abschnitt 2a ist mit Hilfe einer Befestigungsvorrichtung 7 das Rührwerk 5 gelagert. Das Rührwerk 5 wird über die Welle 6 über einen nicht dargestellten Antrieb angetrieben und ist unter einem Winkel β zur Längsachse A geneigt. In diesem Ausführungsbeispiel ist das Rührwerk 5 parallel zum Abschnitt 2a angeordnet. Das Rührwerk kann jedoch auch winkelig zu dem Abschnitt 2a angeordnet sein. In der Figur 2 ist das Rührwerk zentrisch angeordnet. Das Rührwerk kann jedoch, wie gestrichelt (P₁, P₂, P₃) angedeutet ist, auch exzentrisch gelagert sein.

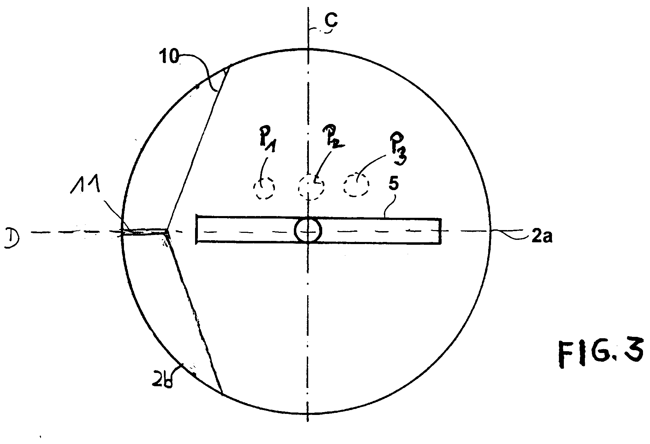

Figur 3 zeigt einen Schnitt entlang der Linie I-I in Figur 1 gemäß einem weiteren Ausführungsbeispiel der vorliegenden Erfindung. Dabei liegt die Trennlinie 10, die die beiden Abschnitte 2a und b voneinander trennen, nicht parallel wie in Figur 2 zur Mittellinie C. Die Trennlinie 10 läuft von der Mittellinie D, die senkrecht auf der Mittellinie C steht, auf die Mittellinie C zu. Durch diese Anordnung ergibt sich, wenn die beiden Abschnitte 2a, b den Winkel α miteinander einschließen, der Spalt 11, der als Auslaufrinne dienen bzw. ausgebildet sein kann. Auch in Figur 3 ist gestrichelt (P₁, P₂, P₃) angedeutet, daß das Rührwerk nicht unbedingt zentrisch angeordnet sein muß.

Bei den zuvor gezeigten Ausführungsbeispielen waren die Abschnitte 2a, 2b des Pfannenbodens 2 um den Winkel α zueinander geneigt. Gemäß einem bevorzugten Ausführungsbeispiel der Erfindung ist der Winkel α 180°, so daß der Pfannenboden aus einer ebenen Platte gebildet werden kann. Auch in diesem Ausführungsbeispiel ist der Pfannenboden nicht symmetrisch zur Längsachse A geneigt angeordnet. In diesem Ausführungsbeispiel kann der gesamte Pfannenboden 2 als Heizung 4 ausgebildet sein. Gemäß einem weiteren bevorzugten Ausführungsbeispiel der vorliegenden Erfindung ist der Winkel δ, der von dem Abschnitt 2b und der Horizontalebene H aufgespannt wird, 0°, so daß der Abschnitt 2b in der Horizontalebene liegt.

Es ist selbstverständlich, daß sich die Ausführungsbeispiele nicht nur auf zwei Abschnitte beschränken. Es können auch mehr Abschnitte gewählt werden, solange gewährleistet bleibt, daß der Pfannenboden nicht achsensymmetrisch bezüglich der Längsachse geneigt ist.

Durch die asymmetrische Anordnung des Pfannenbodens 2 kommt es nicht zu einer rein kreisenden Bewegung der ganzen Maischefüllung, sondern es ergibt sich auch in vertikaler Richtung eine gute Durchmischung der Maische und somit ein optimaler Wärmeübergang.

## Patentansprüche

1. Maischpfanne, die einen zylindrischen Außenmantel, einen Pfannenboden, eine Heizvorrichtung sowie ein Rührwerk aufweist, **dadurch gekennzeichnet**, daß der Pfannenboden (2) asymmetrisch zur Längsachse (A) der Maischpfanne geneigt angeordnet ist.

2. Maischpfanne nach Anspruch 1, **dadurch gekennzeichnet**, daß der Pfannenboden (2) aus zwei Abschnitten (2a, 2b) gebildet ist, die einen bestimmten Winkel (α) miteinander einschließen.

3. Maischpfanne nach Anspruch 1 oder 2, **dadurch gekennzeichnet**, daß in einem der beiden Abschnitte (2a, 2b) das Rührwerk (5) gelagert ist.

4. Maischpfanne nach mindestens einem der vorhergehenden Ansprüche, **dadurch gekennzeichnet**, daß der Pfannenboden (2) mit der Heizvorrichtung (4) versehen ist.

5. Maischpfanne nach mindestens einem der vorherigen Ansprüche, **dadurch gekennzeichnet**, daß der zylindrische Außenmantel (3) zumindest teilweise als Heizvorrichtung (4) ausgebildet ist.
